Europäisches Patentamt

European Patent Office

Office européen des brevets

(11) Veröffentlichungsnummer: **0 382 123**
**A2**

(12) **EUROPÄISCHE PATENTANMELDUNG**

(21) Anmeldenummer: **90102149.3**

(22) Anmeldetag: **03.02.90**

(51) Int. Cl.⁵: **B60J 7/08, B60H 1/26**

(30) Priorität: **04.02.89 DE 3903326**

(43) Veröffentlichungstag der Anmeldung:
**16.08.90 Patentblatt 90/33**

(84) Benannte Vertragsstaaten:
**AT BE CH DE DK ES FR GB GR IT LI LU NL SE**

(71) Anmelder: **Emil Ziegler Metallwarenfabrik GmbH & Co. KG**
**Stuttgarter Strasse 79**
**D-7313 Reichenbach/Fils(DE)**

(72) Erfinder: **Würschum, Erich**
**Im Kapf 2**
**D-7302 Ostfildern 1(DE)**

(74) Vertreter: **Jackisch, Walter, Dipl.-Ing. et al**
**Patentanwalt W. Jackisch & Partner**
**Menzelstrasse 40**
**D-7000 Stuttgart 1(DE)**

(54) **Entlüftungsdach zum Einbau in ein Fahrzeug, insbesondere Kraftfahrzeug wie Omnibus, Wohnmobil und dgl.**

(57) Die Erfindung betrifft ein Entlüftungsdach zum Einbau in ein Fahrzeug wie Omnibus, Wohnmobil, Wohnwagen oder dgl. Das Dach besteht aus einem plattenförmigen Grundkörper (11) mit einer dem Innenraum (4) des Fahrzeugs zugewandten Innenseite (12), wobei der Grundkörper zum Öffnen des Fahrzeugdaches verstellbar ist. Ein derartiges Entlüftungsdach ist nur bei trockener Witterung zum Durchlüften des Fahrzeuginnenraums zu öffnen. Um auch bei schlechter Witterung eine gute Durchlüftung des Fahrzeuginnenraums sicherzustellen, ist vorgesehen, den Grundkörper (11) doppelwandig mit einem Hohlraum auszuführen und in der die Innenseite bildende Innenplatte (12) Saugöffnungen (24) vorzusehen, welche in einen im Hohlraum liegenden Abluftkanal (28) münden, der mit einer Abluftöffnung (29) verbunden ist. Zur Aufrechterhaltung eines kontinuierlichen Abluftstroms kann im Grundkörper (11) ein Sauggebläse (22) angeordnet sein.

Fig. 11

## Entlüftungsdach zum Einbau in ein Fahrzeug, insbesondere Kraftfahrzeug wie Omnibus, Wohnmobil und dgl.

Die Erfindung betrifft ein Entlüftungsdach zum Einbau in ein Fahrzeug wie Omnibus, Wohnmobil, Wohnwagen oder dgl. nach dem Oberbegriff des Anspruches 1.

Zur besseren Durchlüftung des Innenraumes eines Fahrzeuges ist es bekannt, im Fahrzeugdach eine durch ein Schiebedach, ein Hubdach, ein Schiebe-Hubdach oder dgl. verschließbare Öffnung vorzusehen. Bei Omnibussen, Wohnmobilen, Wohnwagen oder dgl. ist es bekannt, das Schiebedach auf dem Fahrzeugdach zu montieren und durch eine Verschiebebewegung, vorzugsweise in Längsrichtung, oder eine Hubbewegung zu öffnen oder zu schließen.

Insbesondere bei großen Reiseomnibussen ist für eine gute Durchlüftung eine derart verschließbare Dachöffnung vorgesehen, was im folgenden allgemein als Entlüftungsdach benannt ist. Hierbei ergibt sich jedoch das Problem, daß das Entlüftungsdach nur bei trockener Witterung ganz oder teilweise geöffnet werden kann; eine gute Durchlüftung des Innenraumes kann daher nur bei trockener Witterung erzielt werden.

Der Erfindung liegt die Aufgabe zugrunde, ein Entlüftungsdach nach dem Oberbegriff des Anspruches 1 derart auszubilden, daß auch bei schlechter Witterung eine gute Durchlüftung des Fahrzeuginnenraumes sichergestellt ist.

Diese Aufgabe wird erfindungsgemäß durch die kennzeichnenden Merkmale des Anspruches 1 gelöst. Bei dem erfndungsgemäßen Entlüftungsdach ist allein durch den Fahrtwind bereits eine Zwangsentlüftung erzielt, ohne daß bei nasser Witterung in den Fahrzeuginnenraum Feuchtigkeit eindringen kann. Auch bei geschlossenem Schiebedach ist eine ausreichende Durchlüftung des Fahrzeuginnenraumes erzielt. Ferner besteht der Vorteil, daß ohne Änderungen am Fahrzeug selbst auch bestehende Schiebedächer, Hubdächer oder dgl. gegen erfindungsgemäße Entlüftungsdächer ausgetauscht werden können. Bei der Serienherstellung von Fahrzeugen kann ohne weitere Montagearbeiten wahlweise ein übliches Schiebedach, Hubdach, Schiebe-Hubdach oder ein erfindungsgemäßes Entlüftungsdach aufgesetzt werden.

In einer bevorzugten Ausführungsform der Erfindung verläuft der Abluftkanal vorzugsweise in etwa parallel zu den Längsseiten des Grundkörpers und liegt weitgehend vollständig im Hohlraum des Grundkörpers. Es kann auch vorteilhaft sein, den Abluftkanal als Erhebung auf der Außenseite des Entlüftungsdaches anzuordnen, wobei die Erhebung insbesondere einteilig mit dem Entlüftungsdach ausgebildet sein kann, was fertigungstechnisch Vorteile bringt.

In einer ersten Ausbildung entspricht die Breite der Abluftöffnung etwa der Breite des Abluftkanals und ist vorzugswei se dem Fachzeugdach zugewandt. Dabei ist die Anordnung der Abluftöffnung bezogen auf die Fahrtrichtung des Fahrzeugs hinten vorgesehen. Um insbesondere im Stand eine gute Entlüftung zu gewährleisten, kann die Abluftöffnung auch als an den Kanten des Grundkörpers umlaufender Schlitz ausgebildet sein, dessen Austrittsöffnung vorzugsweise dem Fachzeugdach zugewandt ist. Im Stillstand des Fahrzeuges kann die Abluft an den Quer- und Längsseiten des Grundkörpers ausströmen, während im Fahrzustand die Abluft im wesentlichen an der -bezogen auf die Fahrtrichtung - hinteren Querseite ausströmen wird.

In vorteilhafter Weiterbildung der Erfindung ist im Grundkörper ein Sauggebläse angeordnet, das aus dem Fahrzeuginnenraum Luft ansaugt und über die Abluftöffnung ausbläst. Mit einem derartigen Sauggebläse wird in einfacher Weise eine jedem Betriebszustand des Fahrzeugs gerecht werdende Zwangsdurchlüftung erzielt.

Vorteilhaft wird als Sauggebläse ein Walzengebläse angeordnet, das quer zur Längsmittelachse des Grundkörpers liegend eingebaut ist. Insbesondere ist ein Radialgebläse vorgesehen, dessen Lüfterrad eine lotrecht zur Innenplatte liegende Drehachse hat und dessen Saugluftstrom axial zum Lüfterrad liegt.

Weitere Merkmale der Erfindung ergeben sich aus den weiteren Ansprüchen, der Beschreibung und der Zeichnung, die nachfolgend im einzelnen beschriebene Ausführungsbeispiele der Erfindung zeigen. Es zeigen:

Fig. 1 einen Längsschnitt durch ein auf einem Fahrzeugdach angeordnetes Entlüftungsdach,

Fig. 2 eine Ansicht des Entlüftungsdaches von unten gemäß Pfeil A in Fig. 1,.

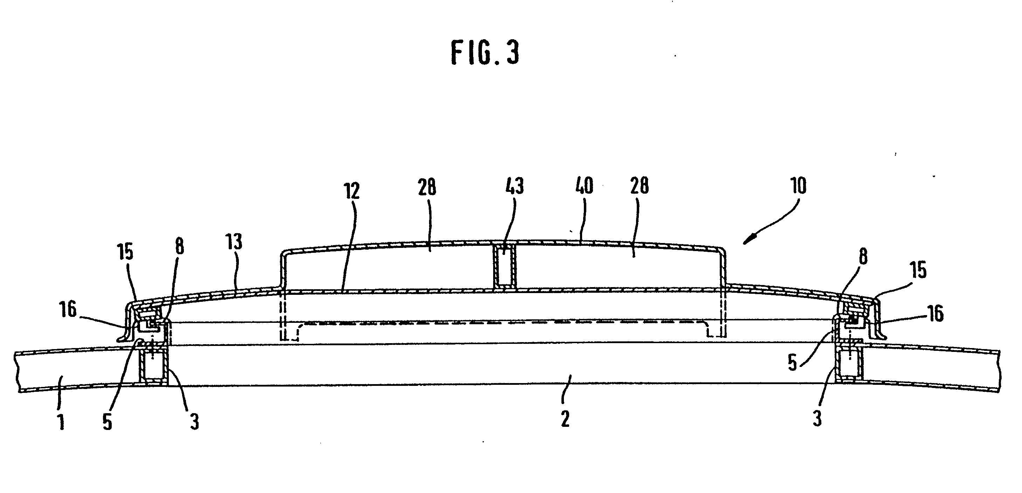

Fig. 3 einen Querschnitt längs der Linie B-B in Fig. 2,

Fig. 4 eine Draufsicht auf ein im Entlüftungsdach im Bereich der vorderen Querseite integriertes Schloß,

Fig. 5 einen in der Ebene des Entlüftungsdaches liegenden Schnitt durch das Schloß nach Fig. 4,

Fig. 6 einen Schnitt längs der Linie C-C in Fig. 5,

Fig. 7 eine vergrößerte Darstellung der Einzelheit X aus Fig. 6,

Fig. 8 eine Darstellung gemäß Fig. 5 bei offenem Schloß,

Fig. 9 einen Schnitt längs der Linie D-D in Fig. 8,

Fig. 10 eine Darstellung gemäß der Fig. 7 mit in Lösestellung stehendem Sperrbolzen,

Fig. 11 eine Schnittdarstellung eines Entlüftungsdaches gemäß Fig. 1 mit einem in Fahrtrichtung hinten liegenden Sauggebläse,

Fig. 12 einen Längsschnitt durch ein als Hubdach ausgebildetes Entlüftungsdach in aufgestellter Lage,

Fig. 13 ein Entlüftungsdach gemäß Fig. 12 in Schließstellung.

In einem Fahrzeugdach 1 ist eine etwa rechtekkige Dachöffnung 2 vorgesehen, die durch einen Rahmen 3 begrenzt ist. Der Rahmen 3 ist aus einem kastenförmigen Profil gebildet, das in dem zweischalig ausgeführten Fahrzeugdach angeordnet ist und die Schiebedachöffnung bzw. deren Rand stabilisiert.

Auf der dem Innenraum 4 abgewandten Seite des Rahmens 3 sind parallel zur Längsrichtung der Dachöffnung 2 Führungsschienen 5 angeordnet, die aus einem U-Profil bestehen. An den beiden Querseiten der Dachöffnung 2 sind Querschienen angeordnet, die mit den Enden der Führungsschienen 5 verbunden sind und mit diesen einen Führungsrahmen bilden, der auf dem Versteifungsrahmen 3 festgelegt ist. Die Führungsschienen 5 sind dabei so angeordnet, daß sie mit ihren Grundseiten einander zugewandt liegen. Die in Fahrtrichtung 7 vorne liegende Querschiene 6 des Führungsrahmens besteht ebenfalls aus einem U-Profil, dessen Grundseite der Dachöffnung 2 zugewandt ist. Die in Fahrtrichtung 7 hinten liegende, U-förmige Querschiene 6 liegt mit ihrer Grundseite der Dachöffnung 2 abgewandt.

Die Dachöffnung 2 ist durch ein Entlüftungsdach 10 verschließbar, das aus einem Grundkörper 11 besteht, der im wesentlichen durch eine Innenplatte 12 und eine Außenplatte 13 gebildet ist. Der Grundkörper 11 hat vorzugsweise Rechteckform; seine Längsmittelachse 14 ist bevorzugt zur Fahrtrichtung 7 des Fahrzeuges ausgerichtet. Die Längsseiten 15 des Grundkörpers 11 sind zum Eingriff mit den Führungsschienen 5 ausgebildet. Vorzugsweise umgreifen in den Längsseiten 15 angeordnete Halteelemente 16 den freien Schenkel 8 der Führungsschienen 5. Die Längsseiten 15 des Grundkörpers 11 sind dabei bis auf die Höhe des Fahrzeugdaches 1 heruntergezogen, so daß die Führungsschienen 5 im wesentlichen in der Ebene des Grundkörpers 11 liegen.

Die vorne liegende Querseite 20 des Grundkörpers 11 weist ein Schloß 30 auf, das mit einem fahrzeugfesten Schließbolzen 31 zusammenwirkt. Das Schloß 30 hat auf der dem Fahrzeugraum 4 zugewandten Innenseite des Grundkörpers eine Handhabe 32, die sich quer zur Längsmittelachse 14 des Entlüftungsdaches und vorzugsweise von der einen Längsseite bis zur anderen Längsseite des Entlüftungsdaches erstreckt.

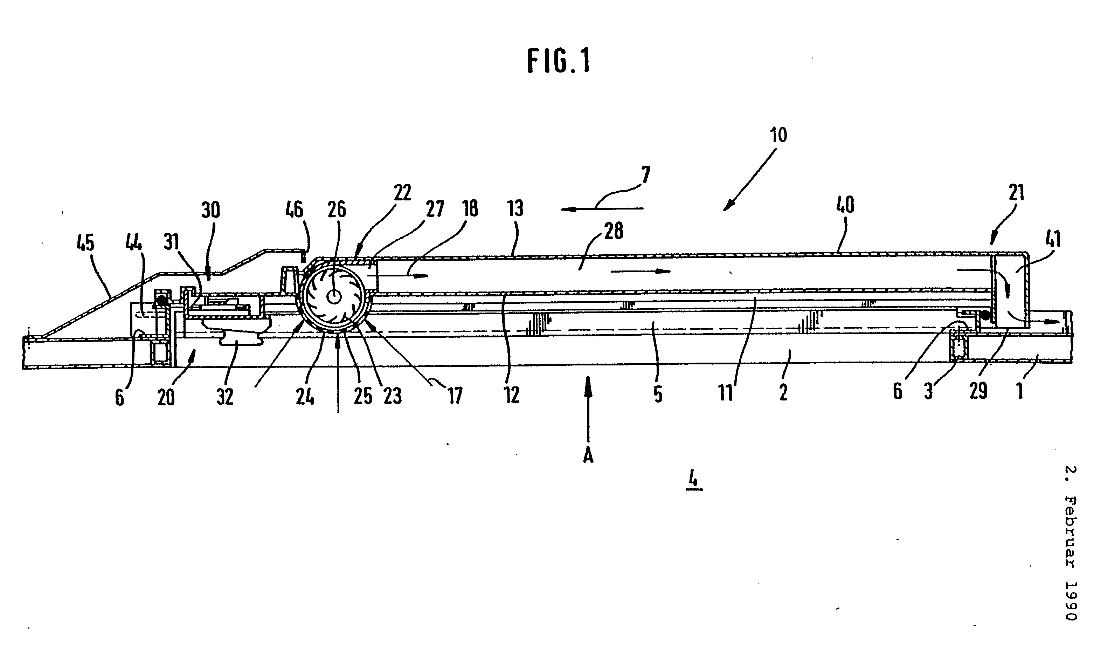

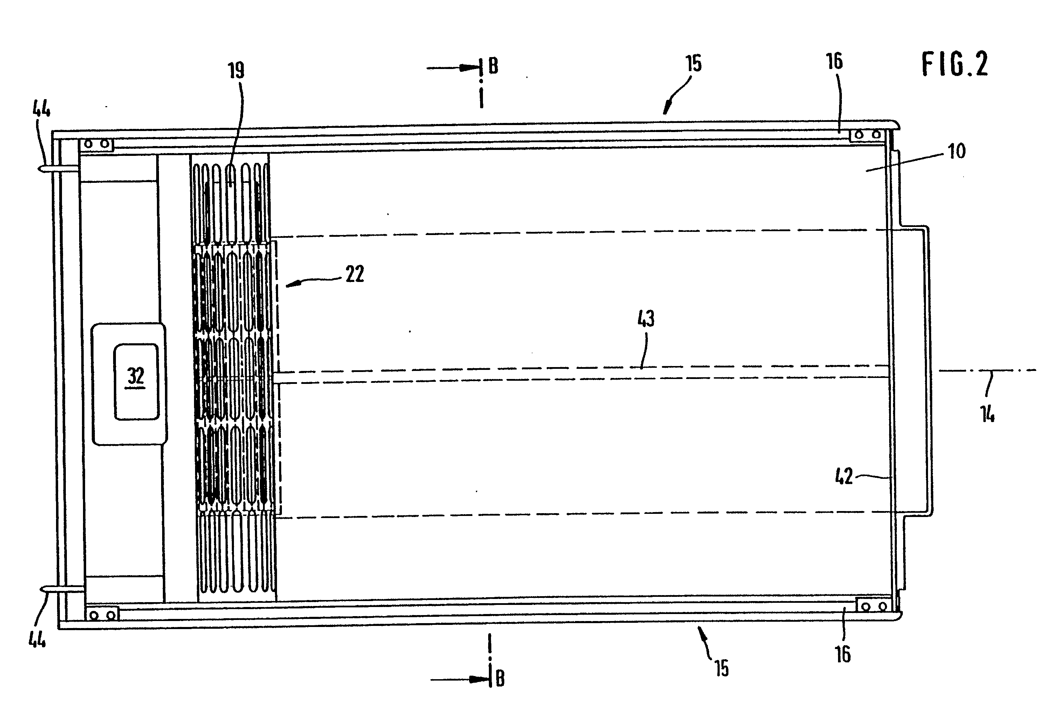

Im Bereich der vorderen Querseite 20 ist im Grundkörper 11 des Entlüftungsdaches 10 vorteilhaft ein Sauggebläse 22 angeordnet, das im gezeigten Ausführungsbeispiel der Fig. 1, 2 und 11 aus einem Walzengebläse 23 besteht. Das Walzengebläse liegt quer und symmetrisch zur Längsmittelachse 14 des Entlüftungsdaches 10, wobei der Antriebsmotor 19 an dem einen oder anderen Ende des Gebläses benachbart zu einer Längsseite 15 des Entlüftungsdaches liegt (Fig. 2). Es kann vorteilhaft sein, rechts und links der Längsmittelachse 14 jeweils ein getrenntes Walzengebläse anzuordnen.

In der Innenplatte 12 ist eine zum Einbau des Walzengebläses ausreichend große Öffnung vorgesehen, die nach dem Einbau des Walzengebläses als Saugöffnung 24 dient. Wie in den Fig. 1 und 2 gezeigt, ist die Öffnung mit einem Lüftungsgitter 25 verschlossen, das eine Vielzahl von Saugöffnungen 24 aufweist. Die Drehachse 26 des Walzengebläses liegt etwa auf der Höhe der Innenplatte 12 des Grundkörpers 11. Der Durchmesser der Walze ist derart, daß sie über einen Teil ihres Umfanges aus der Einbauöffnung der Innenplatte 12 hervor steht, weshalb das Lüftungsgitter 25 kreisförmig gebogen in die Innenplatte 12 eingesetzt ist und entsprechend vorsteht.

Der Abluftstutzen 27 des Walzengebläses 23 liegt in montiertem Zustand oberhalb der Außenplatte 13 innerhalb eines Abluftkanales 28, der als Aufbauteil auf dem Grundkörper 11 aufgesetzt ist. Der Abluftkanal 28 besteht aus einer Haube 40, die symmetrisch zur Längsmittelachse 14 in Längsrichtung des Entlüftungsdaches 10 ausgerichtet und vorteilhaft in der Außenplatte 13 ausgeformt ist. Die Breite der Haube 40 entspricht etwa der halben Breite des Entlüftungsdaches.

Der Abluftkanal 28 erstreckt sich in Längsrichtung des Entlüftungsdaches 10 zu dessen hinterer Querseite 21 und mündet dort in einen Abluftschacht 41, der eine dem Fahrzeugdach 1 zugewandte Abluftöffnung 29 aufweist. Der Abluftschacht 41 besteht aus einem etwa rechteckförmigen Gehäuse, das in Querrichtung zum Entlüftungsdach 10 der Breite der Haube 40 entspricht. Der Abluftschacht 41 schließt an die hintere Querseite 21 des Grundkörpers 11 an, wobei seine Abluftöffnung 29 dem Fahrzeugdach 1 zugewandt ist und eine Breite aufweist, die etwa der Breite der Haube 40 entspricht.

Zur Versteifung des Entlüftungsdaches 10 ist vorteilhaft vorgesehen, die hintere Querseite 21 durch eine versteifende Strebe 42 zu bilden, die an ihren Enden mit den über die Längsseiten 15 sich erstreckenden Halteelementen 16 verbunden ist. Zur Erzielung einer ausreichenden Steifigkeit ist es vorteilhaft, in der kanalbildenden Haube 40 auf der Längsmittelachse 14 des Daches 10 ein zur vorderen Querseite 20 verlaufendes Versteifungsprofil 43 vorzusehen. Hierdurch wird die gesamte Steifigkeit des aus Kunststoff gefertigten Entlüftungsdaches 10 deutlich erhöht.

Wie aus Fig. 2 zu ersehen, erfolgt die Stromversorgung des Antriebsmotors 19 des Walzengebläses 23 über Kontaktstifte 44, die bei geschlossenem Entlüftungsdach in entsprechende Kontaktbuchsen in der vorderen Querschiene 6 eingreifen und den elektrischen Stromkreis des Antriebsmotors 19 schließen.

In Fahrtrichtung 7 gesehen ist vor der vorderen Querschiene 6 ein Windabweiser 45 angeordnet, der sich entgegen der Fahrtrichtung bis etwa zum Walzengebläse 23 erstreckt. Die Höhe des Windabweisers 45 ist so vorgesehen, daß seine obere Kante 46 geringfügig höher liegt als der höchste Punkt der Haube 40; auf diese Weise stört das auf dem Fahrzeugdach 1 aufgesetzte Entlüftungsdach 10 die Strömungsverhältnisse am Fahrzeug nur geringfügig.

Bei geschlossenem Entlüftungsdach 10 kann das Walzengebläse 23 über den elektrischen Stromkreis mittels eines Schalters in Betrieb genommen werden und saugt über die Saugöffnungen 24 im Saugluftstrom 17 Luft aus dem Fahrzeuginnenraum 4 ab, fördert sie als Abluftstrom 18 durch den Abluftkanal 28 zum Abluftschacht 41, aus dem die Abluft über die Abluftöffnung 29 abströmt. Bewegt sich das Fahrzeug in Fahrtrichtung 7, wird die Funktion des Walzengebläses aufgrund einer vom Fahrtwind erzeugten Sogwirkung an der Abluftöffnung leistungserhöhend unterstützt.

Wird das als Schiebedach ausgebildete Entlüftungsdach 10 geöffnet, wird gleichzeitig der elektrisches Stromkreis des Antriebsmotors 19 unterbrochen und das mit einem Gebläse 22 ausgeführte Schiebedach 10 entspricht in seiner Funktion dem eines bekannten Schiebedaches ohne Gebläse.

Wird ein Grundkörper 11 verwendet, bei dem die Innenplatte 12 und die Außenplatte 13 mit einem größeren Abstand voneinander liegen, kann der Abluftkanal durch den Hohlraum im Grundkörper 11 selbst gebildet sein. Bei entsprechender Formgebung des Grundkörpers kann es zweckmäßig sein, den Abluftkanal 28 einteilig mit dem Grundkörper auszubilden. Dabei wirkt die - im Ausführungsbeispiel als Haube 40 vorgesehene - Wandung des Abluftkanales aufgrund einer Profilierung versteifend für den aus Kunststoff bestehenden Grundkörper.

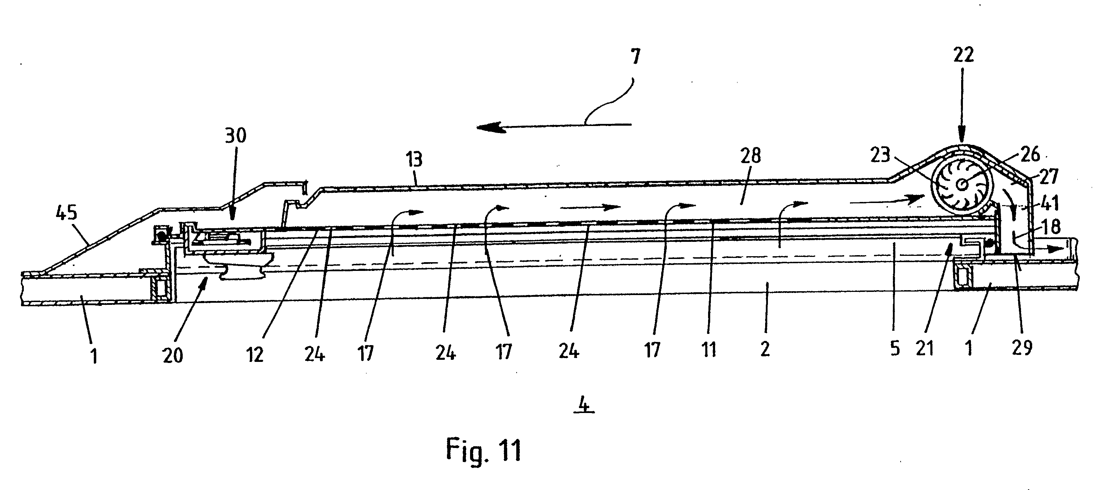

Das in Fig. 11 gezeigte Ausführungsbeispiel eines Entlüftungsdaches 10 entspricht im Aufbau dem Ausführungsbeispiel nach den Fig. 1 und 2, weshalb für gleiche Teile gleiche Bezugszeichen verwendet sind. Das Entlüftungsdach ist wiederum als Schiebedach ausgebildet und weist das Sauggebläse 22 auf, das als Walzengebläse 23 ausgebildet ist. Das Sauggebläse 22 ist quer zur Längsmittelachse des Grundkörpers 11 im Bereich der Querseite 21 kurz vor dem Abluftschacht 41 am Ende des Abluftkanals 28 angeordnet. Die Drehachse 26 liegt dabei etwa in der Ebene der Außenplatte 13, welche im Bereich des Walzengebläses 23 bis zu einer oberen Mantellinie ansteigt, um dann zum Abluftschacht 41 hin abzufallen. Der Bereich zwischen der Außenplatte 13 und dem Abluftschacht 41 ist somit dem Walzengebläse 23 angepaßt ausgeformt.

In der Innenplatte 12 des Grundkörpers 11 sind über die Länge des Abluftkanals 7 mehrere Saugöffnungen 24 angeordnet, durch die der Saugluftstrom 17 eintreten kann. Bevorzugt können die Saugöffnungen 24 als quer zum Grundkörper liegende Schlitze ausgeführt sein, die sich im wesentlichen von einer Längsseite bis zur anderen Längsseite des Grundkörpers erstrecken. Es kann auch vorteilhaft sein, quer zur Längsmittelachse des Grundkörpers 11 mehrere nebeneinander liegende Saugöffnungen vorzusehen, die sich über die Länge des Abluftkanals wiederholen.

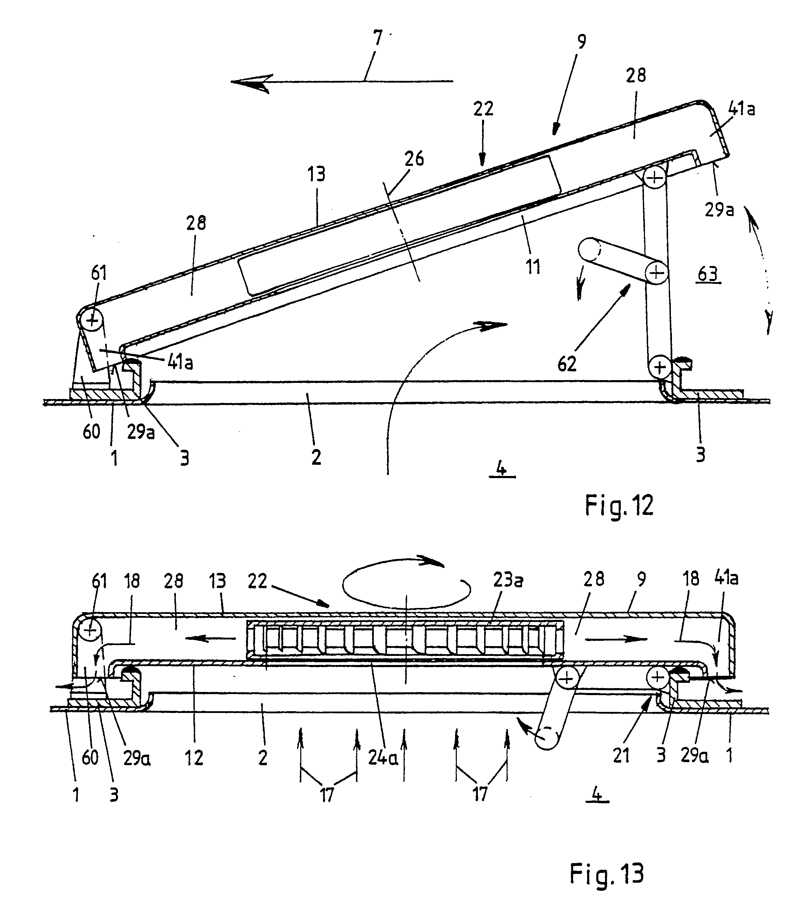

In den Fig. 12 und 13 ist ein als Hubdach ausgebildetes Entlüftungsdach 9 gezeigt, das vom Grundkörper her ähnlich aufgebaut ist wie das vorstehend beschriebene Schiebedach. Für gleiche Teile sind daher wiederum gleiche Bezugszeichen verwendet.

Das Hubdach 9 ist zweischalig ausgebildet, wobei zwischen der Innenplatte 12 und der Außenplatte 13 ein Hohlraum vorgesehen ist, der einerseits zur Aufnahme eines Sauggebläses 22 dient und andererseits den Abluftkanal 28 aufnimmt, der im wesentlichen als Abluftraum ausgebildet ist. Dieser Abluftraum ist begrenzt durch die Längs- und Querseiten des Grundkörpers 11 einerseits und das Sauggebläse 22 andererseits. Der Abluftraum geht in den Abluftschacht 41 über, der den Grundkörper 11 umlaufend umgibt und eine dem Fahrzeugdach 1 zugewandte Austrittsöffnung 29a aufweist, welche als an den Kanten des Grundkörpers 11 umlaufender Schlitz die Abluftöffnung des Entlüftungsdaches 9 bildet.

Das als Radiallüfter ausgebildete Sauggebläse 22 hat eine Drehachse 26, die lotrecht auf der Innenplatte 12 bzw. der Außenplatte 13 steht. Das Sauggebläse 22 ist über einer zentralen Zuluftöffnung 24a vorgesehen, die kreisrund ausgebildet ist und etwas kleiner als das Lüfterrad 23a ist. Es kann vorteilhaft sein, statt einer einzigen, zentralen, kreisrunden Saugöffnung 24a mehrere Saugöffnungen in der Innenplatte 12 anzuordnen oder aber die Saugöffnung 24a durch ein Lüftungsgitter abzudekken. Der Saugluftstrom 17 tritt durch die Saugöffnung 24a axial in das Lüfterrad 23a ein und wird nach dem Schleuderprinzip radial in den Abluftraum 28 befördert, um von da über die schlitzförmige Abluftöffnung 29a auszutreten. Bei geschlossenem Hubdach (Fig. 13) und stillstehendem Fahrzeug kann die Abluft 18 rund um den Grundkörper ausströmen; bewegt sich das mit dem Hubdach 9 versehene Fahrzeug in Pfeilrichtung 7, wird die Abluft im wesentlichen im Bereich der hinteren Querseite 21 des Hubdaches 9 ausströmen.

Das Hubdach ist - in Fahrtrichtung 7 vorne - um eine Achse 61 drehbar angelenkt, wobei die Achse im Hohlraum 28 bzw. im Abluftschacht innerhalb des Grundkörpers 11 liegt. Die Achse 61 ist mittels Bügeln 60 auf dem Rahmen 3 des Entlüftungsdaches festgelegt, wobei der Rahmen auf dem Fahrzeugdach 1 festliegt. An der - in Fahrtrichtung 7 gesehenen -hinteren Querseite 21 ist ein Betätigungsmechanismus 62 vorgesehen (Fig. 12), über den das Hubdach aufgestellt (Fig. 12) oder geschlossen (Fig. 13) werden kann. Bei dem gemäß Fig. 13 geschlossenen Hubdach erfolgt die Entlüftung ausschließlich über das Sauggebläse 22 , während bei aufgestelltem Hubdach (Fig. 12) verbrauchte, warme Luft aus der Öffnung 63 austreten kann. Bei fahrendem Fahrzeug entsteht an der Öffnung 63 eine luftabsaugende Sogwirkung, wodurch ein ausreichender Luftaustausch gewährleistet ist.

Die gezeigten Ausführungsbeispiele der Entlüftungsdächer 9 und 10 zeigen jeweils im Grundkörper angeordnete Sauggebläse 22. Es kann ausreichend sein, zur Entlüftung die vorgesehenen Entlüftungsdächer auch ohne Gebläse auszurüsten, wobei verbrauchte, warme Luft über die Saugöffnungen 24 bzw. 24a in den Abluftkanal 28 eintreten und über die Abluftöffnung 29 bzw. 29a abströmen kann. Bei bestehendem Fahrtwind entsteht ohnehin an der Abluftöffnung 29 bzw. 29a eine Sogwirkung, so daß bei fahrendem Fahrzeug auch ohne Gebläse eine ausreichende Luftabfuhr gewährleistet ist.

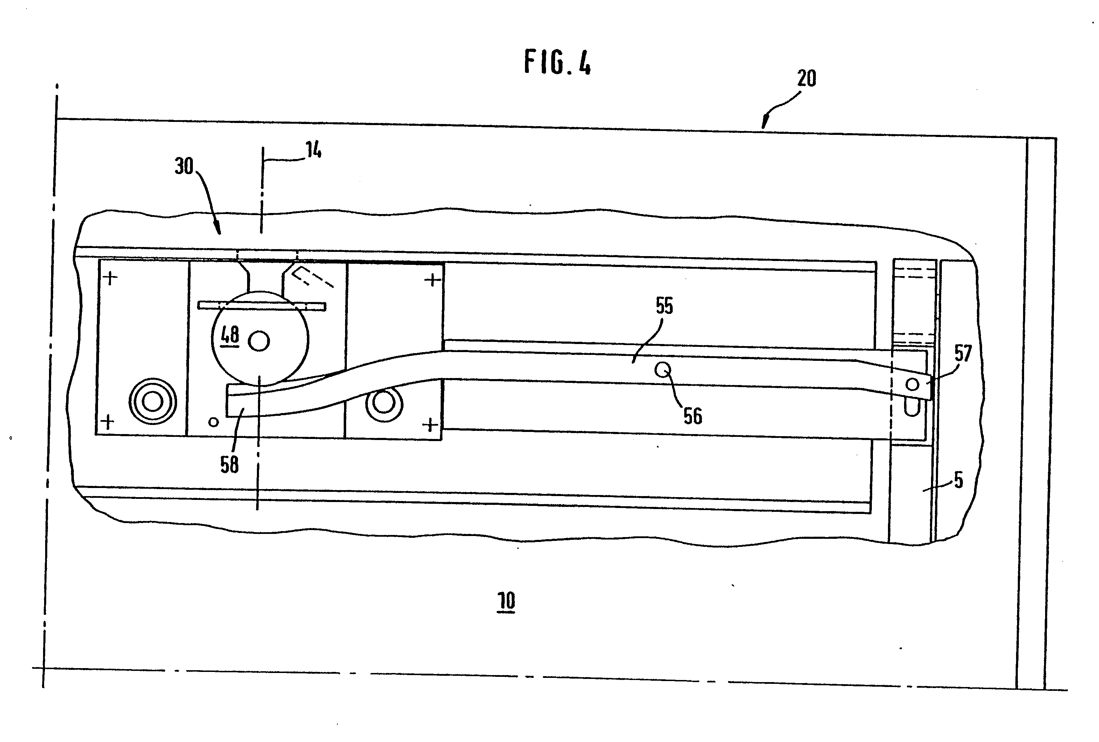

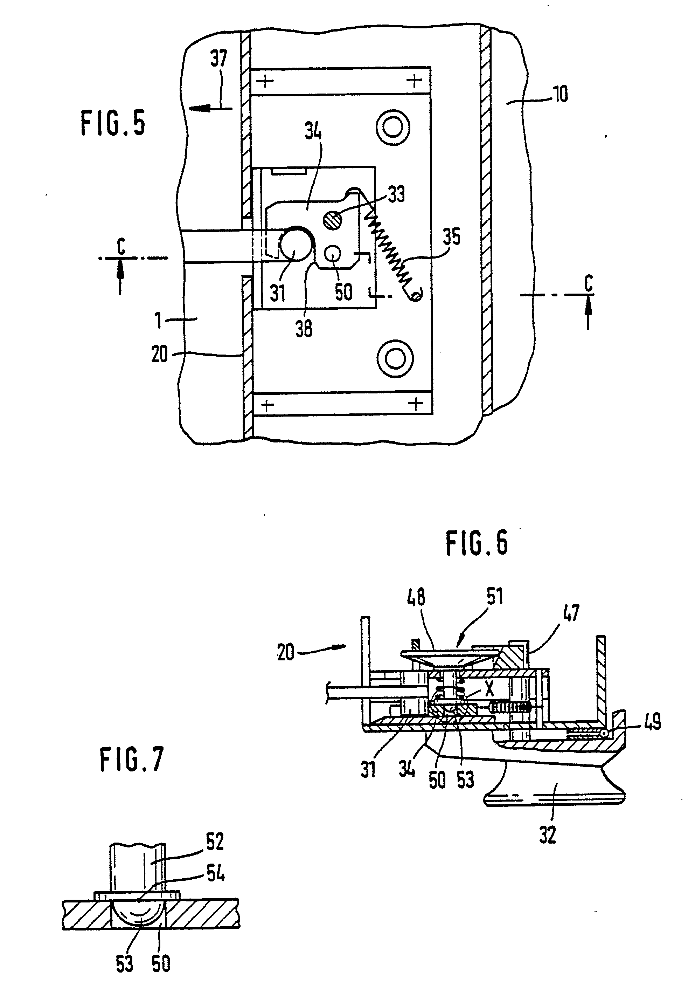

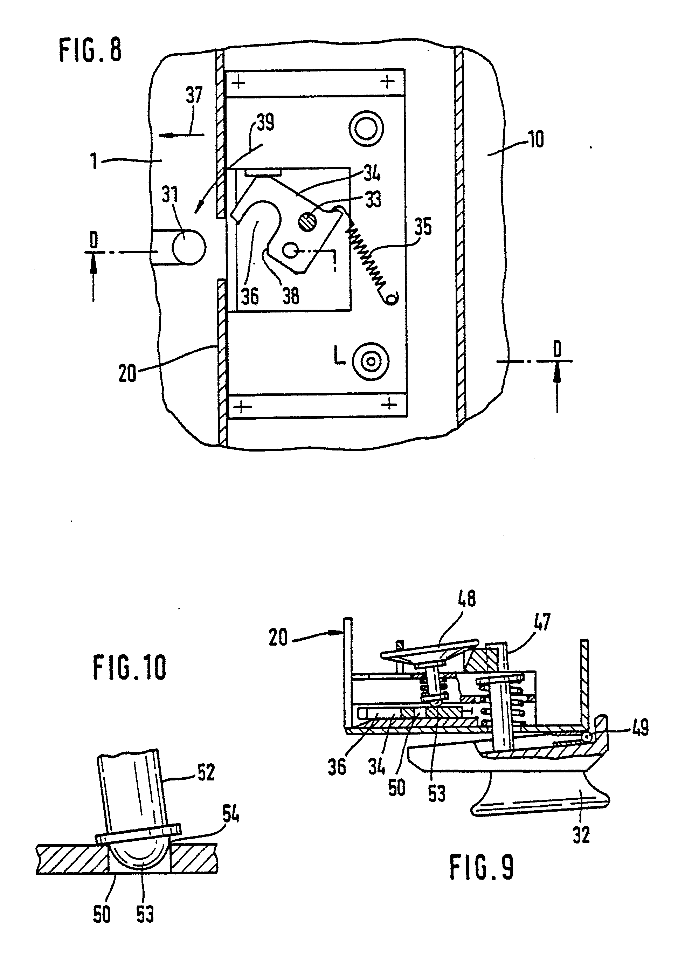

Das in den Fig. 1 und 2 gezeigte Schloß 30 ist nachfolgend anhand der Fig. 4 bis 10 näher erläutert. Das Schloß besteht im wesentlichen aus einem am Fahrzeugdach festgelegten Schließbolzen 31 (Fig. 5), der mit einem in der Ebene des Schiebedaches 10 um eine lotrechte Achse 33 verschwenkbaren Schwenkriegel 34 zusammenwirkt. Der Schwenkriegel 34 ist durch eine Feder 35 in die in Fig. 8 gezeigte Öffnungsstellung kraftbeaufschlagt und weist eine dem Schließbolzen 31 angepaßte Aufnahme 36 auf. Wird das Schiebedach 10 in Pfeilrichtung 37 geschlossen, stößt der Schließbolzen 31 gegen die gegenüberliegende Kante 38 der Aufnahme und verschwenkt dabei den Schwenkriegel 34 gegen die Kraft der Feder 35 in Pfeilrichtung 39. Mit der Bewegung des Schiebedaches 10 in Pfeilrichtung 37 wird somit gleichzeitig der Schwenkriegel 34 in seine in Fig. 5 gezeigte Schließstellung verschwenkt.

In der Schließstellung ist der Schwenkriegel durch eine Sperre 51 festgesetzt. Die Sperre besteht im wesentlichen aus einem zur Schwenkebene lotrecht stehenden Sperrbolzen 52, der einen aus einer Halbkugel bestehenden Rastkopf 53 aufweist. In der Sperrstellung (Fig. 6) liegt der Rastkopf 53 in einem im Schwenkriegel 34 vorgesehenen Rastloch 50; dabei liegt der Rand mit dem Mittelpunkt 54 der Halbkugel genau am oberen Rand des Rastloches 50. Durch diese Lage ist sichergestellt, daß in der Ebene des Schwenkriegesl 34 wirkende Kräfte nicht öffnend auf den Sperrbolzen 52 wirken können.

Zum Öffnen des Schlosses wird die Handhabe 32 um eine quer zur Längsrichtung des Schiebedaches liegende Schwenkachse 49 verschwenkt, wobei ein in das Schloß ragender Betätigungsbolzen 47 gegen einen Betätigungskegel 48 stößt, dessen Spitze an dem dem Rastkopf 53 gegenüberliegenden Ende des Sperrbolzens 52 festgelegt ist. Der zur Schwenkebene des Schwenkriegels 34 durch eine Feder lotrecht gehaltene Sperrbolzen 52 kippt aufgrund des anstoßenden Betätigungsbolzens 47 aus seiner lotrechten Lage, wodurch die Halbkubel 53 zum Teil aus dem Rastloch 50 herausbewegt wird, wie in Fig. 10 dargestellt. Wird das Schiebedach entgegen der Pfeilrichtung 37 verschoben, gleitet die Kante 54 des Rastloches 50 auf der Halbkugel, wodurch der Rastkopf 53 aus dem Rastloch 50 herausgehoben und der Schwenkriegel 34 freigegeben wird. Dieser verschwenkt nun unter Wirkung der Zugkraft der Feder 35 in seine in Fig. 8 gezeigte Öffnungsstellung.

Aufgrund des erfindungsgemäß ausgebildeten Sperrbolzens mit dem Rastkopf 53 in Form einer Halbkugel sind nur geringe Betätigungskräfte zur Öffnung des Schlosses 30 notwendig. Solange die Halbkugel vollständig in dem Rastloch 50 liegt, kann der Schwenkriegel 34 auch bei Aufbringen größter Schwenkkräfte nicht verschwenkt werden. Wird hingegen die Halbkugel des Rastkopfes nur geringfügig aus dem Rastloch 50 herausgeschwenkt, sind die zum vollständigen Öffnen noch notwendigen Kräfte relativ klein.

Aufgrund der geringen Öffnungskräfte des erfindungsgemäßen Schlosses 30 eignet sich dieses insbesondere für eine elektrische Betätigung des Schiebedaches. Hierzu ist ein Schwenkhebel 55 vorgesehen, dessen Schwenkpunkt 56 zwischen einer Führungsschiene 5 und dem Schloß 30 liegt. Wird an dem Ende 57 des Schwenkhebels 55 eine Zugkraft zum Öffnen des Schiebedaches 10 aufgebracht, verschwenkt zunächst der Hebel 55 um die Schwenkachse 56, wodurch das Betätigungsende 58 gegen den Betätigungshebel 48 stößt und den Sperrbolzen aus seiner Lotrechten kippt, wodurch ein Öffnen des Schlosses in der beschriebenen Weise möglich wird.

In Schließrichtung des Schiebedaches 10 wird das Betätigungsende 58 des Schwenkhebels 55 aus dem Bereich des Betätigungshebels 48 verschwenkt, so daß der Sperrbolzen 52 unter Federkraft lotrecht in das Rastloch 50 einrasten kann.

## Ansprüche

1. Entlüftungsdach zum Einbau in ein Fahrzeug, wie Omnibus, Wohnmobil, Wohnwagen oder dgl., bestehend aus einem plattenförmigen Grundkörper (11) mit einer dem Innenraum (4) des Fahrzeuges zugewandten Innenseite (12), wobei der Grundkörper zum Öffnen des Fahrzeugdaches (1) verstellbar ist,
dadurch gekennzeichnet, daß der Grundkörper (11) doppelwandig mit einem Hohlraum ausgeführt ist und die die Innenseite bildende Innenplatte (12) Saugöffnungen (24) aufweist, die in einen im Hohlraum liegenden Abluftkanal (28) münden, der mit einer Abluftöffnung (29) verbunden ist.

2. Dach nach Anspruch 1,
dadruch gekennzeichnet, daß der Abluftkanal (28) vorzugsweise in etwa parallel zu den Längsseiten (15) des Grundkörpers (11) verläuft und weitgehend vollständig im Hohlraum des Grundkörpers (11) liegt.

3. Dach nach Anspruch 1,
dadurch gekennzeichnet, daß der Abluftkanal (28) vorzugsweise in etwa parallel zu den Längsseiten (15) des Grundkörpers (11) verläuft und im wesentlichen als Erhebung auf der Außenseite des Schiebedaches (10) liegt.

4. Dach nach einem der Ansprüche 1 bis 3,
dadurch gekennzeichnet, daß die Abluftöffnung (29) in etwa der Breite des Abluftkanales (28) entspricht und vorzugsweise dem Fahrzeugdach (1) zugewandt ist.

5. Dach nach einem der Ansprüche 1 bis 4,
dadurch gekennzeichnet, daß die Abluftöffnung als umlaufender Schlitz an den Kanten des Grundkörpers angeordnet ist, dessen Austrittsöffnung vorzugsweise dem Fachzeugdach zugewandt ist.

6. Dach nach einem der Ansprüche 1 bis 5,
dadurch gekennzeichnet, daß im Grundkörper (11) ein Sauggebläse (22) angeordnet ist.

7. Dach nach Anspruch 5,
dadurch gekennzeichnet, daß das Sauggebläse (22) oberhalb der Saugöffnungen (24) im Bereich einer Querseite (20) des Grundkörpers (11) und die Abluftöffnung (29) im Bereich der anderen Querseite (21) des Grundkörpers (11) angeordnet ist.

8. Dach nach Anspruch 6,
dadurch gekennzeichnet, daß über die Länge des Abluftkanals (28) mehrere Saugöffnungen (24) verteilt angeordnet sind und das Sauggebläse (22) am Ende des Abluftkanals (28) vor der Abluftöffnung (29) liegend angeordnet ist.

9. Dach nach einem der Ansprüche 6 bis 8,
dadurch gekennzeichnet, daß das Sauggebläse (22) ein Walzengebläse (23) ist, das quer zur Längsmittelachse (14) des Grundkörpers (11) liegend eingebaut ist.

10. Dach nach Anspruch 9,
dadurch gekennzeichnet, daß die Walze des Walzengebläses (23) über einen Teil ihres Umfanges aus einer Öffnung in der Innenplatte (12) des Grundkörpers (11) hervorsteht und vorzugsweise mit einem Lüftungsgitter (25) abgedeckt ist.

11. Dach nach Anspruch 5,
dadurch gekennzeichnet, daß das Sauggebläse ein Radialgebläse (22 ) ist, dessen Drehachse (26) lotrecht zur Innenplatte (12) liegt und der Saugluftstrom durch mindestens eine zentrale Saugöffnung (24a) in der Innenplatte dem Lüfterrad axial zugeführt ist.

12. Dach nach einem der Ansprüche 1 bis 11,
dadurch gekennzeichnet, daß der elektrische Antriebsmotor (19) des Sauggebläses (22) über in Schließstellung des Schiebedaches (10) in Kontaktbuchsen liegende Kontaktstifte (44) an ein elektrisches Netz anschließbar ist.

13. Dach, insbesondere nach einem der Ansprüche 1 bis 12, mit an einer Querseite (20) angeordnetem Schloß (30), das einen um eine Achse schwenkbaren Riegel (34) mit einer Aufnahme (36) für einen fahrzeugfesten Schließbolzen (31) aufweist, wobei der Schwenkriegel (34) in seiner Schließstellung durch einen in ein Rastloch (50) des Schwenkriegels (34) eingreifenden Sperrbolzen (52) gesichert ist,
dadurch gekennzeichnet, daß der Sperrbolzen (52) lotrecht zur Schwenkebene des Schwenkriegesl (34) steht und einen als Halbkugel ausgebildeten Rastkopf (53) aufweist, der in Raststellung vollständig im Rastloch (50) liegt, wobei der Sperrbolzen (52) in seiner Freigabestellung in einer von der Lotrechten abweichenden Stellung liegt (Fig. 10) und vorzugsweise durch eine Feder in seiner lotrechten Lage gehalten ist, wobei die Feder insbesondere eine den Sperrbolzen (52) umgebende Schraubenfeder ist.

2. Februar 1990

FIG.1

FIG.2

EP 0 382 123 A2

# FIG.3

EP 0 382 123 A2

FIG.4

EP 0 382 123 A2

FIG.5

FIG.6

FIG.7

FIG. 8

FIG. 10

FIG. 9

Fig. 11

EP 0 382 123 A2

Fig. 12

Fig. 13